# EUROPÄISCHE PATENTANMELDUNG

(11) **EP 0 865 959 A1**
(43) Veröffentlichungstag der Anmeldung: **23.09.1998**
(21) Anmeldenummer: 98104030.6
(22) Anmeldetag: 06.03.1998
(51) Int. Cl.: B60L 7/26, B66F 9/06

(54) **Flurförderzeug mit einer elektrischen Fahrantriebsmaschine**

(30) Priorität: 20.03.1997 DE 19711700
(71) Anmelder: Still & Saxby S.à.r.l., 77107 Meaux-Cedex (FR)
(72) Erfinder: Fabre, Christian, 60360 Auchy La Montagne (FR)
(74) Vertreter: Kasseckert, Rainer

(57) **Zusammenfassung**

Gegenstand der Erfindung ist ein Flurförderzeug, insbesondere deichselgelenktes Flurförderzeug oder Kommissioniergerät, mit mindestens einem Antriebsrad (5), welches mit einer elektrischen Fahrantriebsmaschine (9) verbunden ist. Die Größe und die Richtung eines Drehmoments der Fahrantriebsmaschine (9) sind mittels einer Steuervorrichtung (10) steuerbar. Erfindungsgemäß ist die Fahrantriebsmaschine (9) als Betriebsbremse für das Flurförderzeug vorgesehen, wobei ein mittels der Fahrantriebsmaschine (9) erzeugbares Bremsmoment in Abhängigkeit von der momentanen Fahrgeschwindigkeit des Flurförderzeugs und/oder in Abhängigkeit von dem momentanen Beladungszustand des Flurförderzeugs mittels der Steuervorrichtung (10) beeinflußbar ist. In einer Ausgestaltung ist das Antriebsrad zusätzlich mit einer Speicherbremse (13) verbunden, die als Parkbremse für das Flurförderzeug vorgesehen ist. Darüber hinaus sind Mittel zum Erkennen einer Fehlfunktion der Steuervorrichtung (10) der Fahrantriebsmaschine (9) vorgesehen, welche mit der Speicherbremse (13) in Wirkverbindung stehen.

## Beschreibung

Die Erfindung betrifft ein Flurförderzeug, insbesondere deichselgelenktes Flurförderzeug oder Kommissioniergerät, mit mindestens einem Antriebsrad, welches mit einer elektrischen Fahrantriebsmaschine verbunden ist, wobei die Größe und die Richtung eines Drehmoments der Fahrantriebsmaschine mittels einer Steuervorrichtung steuerbar sind.

Flurförderzeuge dieses Typ sind in der Regel als Mitgängerfahrzeuge oder als Fahrerstandfahrzeuge ausgeführt und mit einer Lastaufnahmeeinrichtung ausgerüstet, die ein Aufnehmen, Anheben und Transportieren von Lasten ermöglicht. Gattungsgemäße Hochhub-Flurtörderzeuge weisen darüber hinaus einen Hubmast auf, an dem die Lastaufnahmeeinrichtung auf- und abbewegbar befestigt ist.

Der Fahrantriebsmotor wird von einer Bedienperson mittels eines Fahrantriebsschalters betätigt, der bei deichselgeführten Flurförderzeugen in der Regel an der Deichsel angeordnet ist. Durch Betätigen des Fahrschalters kann die Richtung und die Große eines Drehmoments des Fahrantriebsmotors vorgegeben werden. Der Fahrschalter ist hierzu mit der Steuereinheit der Fahrantriebsmaschine verbunden, welche die Fahrantriebsmaschine entsprechend der Stellung des Fahrschalters steuert. Das Flurförderteug kann auf diese Weise über den Fahrantriebsmotor sowohl beschleunigt als auch abgebremst werden.

Die erreichbaren Bremswerte hängen hierbei in starkem Maße von der jeweiligen Betriebssituation des Flurförderzeugs, insbesondere von dem Gewicht einer aufgenommenen Ladung und von der Fahrgeschwindigkeit ab. Um jederzeit ein ausreichendes Bremsvermögen des Flurförderzeugs sicherzustellen, sind gattungsgemäße Flurförderzeuge des Standes der Technik mit einer zusätzlichen Speicherbremse ausgerüstet, die beispielsweise in Abhängigkeit von der Stellung einer Deichsel betätigbar sind.

Hierfür werden in der Regel Speicherbremsen mit fest eingestelltem Bremsmoment verwendet, die lediglich zwei Schaltstellungen aufweisen. Dies hat zur Folge, daß ein mit geringem Gewicht beladenes Flurförderzeug über die Speicherbremse mit einer sehr großen Bremsbeschleunigung abgebremst wird, was beispielsweise zu einem Umkippen der Ladung führen kann. Dieser Nachteil kann durch die Verwendung einer Speicherbremse mit regelbarem Bremsmoment vermieden werden. Speicherbremsen dieser Art erfordern jedoch eine aufwendige Steuervorrichtung, besonders deshalb, weil die Kraftverhältnisse innerhalb der Bremse durch den sich verändernden Luftspalt laufend variieren.

Der vorliegenden Erfindung liegt die Aufgabe zugrunde, ein einfach aufgebautes, gattungsgemäßes Flurförderzeug zur Verfügung zu stellen, das sich durch verbesserte Bremseigenschaften auszeichnet.

Diese Aufgabe wird erfindungsgemäß dadurch gelöst, daß die Fahrantriebsmaschine als Betriebsbremse für das Flurförderzeug vorgesehen ist, wobei ein mittels der Fahrantriebsmaschine erzeugbares Bremsmoment in Abhängigkeit von der momentanen Fahrgeschwindigkeit des Flurförderzeugs und/oder in Abhängigkeit von dem momentanen Beladungszustand des Flurförderzeugs mittels der Steuervorrichtung beeinflußbar ist.

Während des Betriebs des Flurförderzeugs erforderlichen Bremsvorgänge werden hierbei ausschließlich mit der Fahrantriebsmaschine ausgeführt. Durch die Abhängigkeit des Bremsmoments von der Fahrgeschwindigkeit und/oder von dem Beladungszustand ist sichergestellt, daß in jeder Betriebssituation ein ausreichendes Bremsmoment zur Verfügung steht. Gleichzeitig wird das maximale Bremsmoment derart eingestellt, daß keine überhöhten, die Betriebssicherheit des Flurförderzeugs gefährdenden Bremsbeschleunigungen auftreten können. Durch die Auslegung der Fahrantriebsmaschine als Betriebsbremse werden gegenüber der herkömmlichen Bremsenanordnung nur wenige zusätzliche Bauteile benötigt. Gleichzeitig wird die Wirksamkeit der Bremse sowie das Betriebsverhalten des gesamten Flurförderzeugs infolge der verbesserten Steuerbarkeit der Bremse erheblich verbessert.

Zweckmäßigerweise sind hierbei Mittel zum Erfassen des momentanen Beladungszustands des Flurförderzeugs vorgesehen, die mit der Steuervorrichtung in Wirkverbindung stehen. Der Beladungszustand, insbesondere das Gewicht einer aufgenommenen Last wird hierdurch kontinuierlich erfaßt und eine dem Gewicht entsprechende Größe erzeugt und der Steuervorrichtung zur Verfügung gestellt. Ein geeignetes Mittel zum Erfassen des Beladungszustands stellt beispielsweise ein den Druck in einem Hubzylinder erfassender Sensor dar.

Gleichermaßen zweckmäßig ist es, wenn Mittel zum Erfassen der momentanen Fahrgeschwindigkeit des Flurförderzeugs vorgesehen sind, die mit der Steuervorrichtung in Wirkverbindung stehen. Eine die Fahrgeschwindigkeit wiedergebende Größe kann beispielsweise mit einem an einem Rad des Flurförderzeugs angeordneten Drehgeschwindigkeitssensor erzeugt werden.

Eine besonders vorteilhaft Ausführung liegt vor, wenn die Steuervorrichtung ein Mittel zum Erfassen der momentanen Fahrgeschwindigkeit darstellt. Die Drehgeschwindigkeit der Fahrantriebsmaschine ist direkt proportional zu der Fahrgeschwindigkeit des Flurförderzeugs. Aus in der Steuervorrichtung der Fahrantriebsmaschine vorliegenden Größen kann jederzeit die momentane Drehgeschwindigkeit der Fahrantriebsmaschine ermittelt werden, um hieraus Rückschlüsse auf das erforderliche oder das zulässige Bremsmoment zu ziehen. Bei dieser Anordnung kann auf einen eigenen Sensor zur Ermittlung der Fahrgeschwindigkeit verzichtet werden.

In einer Weiterbildung der Erfindung ist die Fahrantriebsmaschine während eines Abbremsens des Flurförderzeugs als Generator betreibbar. Die Bremsenergie des Flurförderzeugs wird hierdurch zumindest teilweise zurückgewonnen und vorzugsweise zum Aufladen einer Batterie verwendet.

Mit besonderem Vorteil ist als Fahrantriebsmaschine eine Gleichstrom-Nebenschlußmaschine vorgesehen. Das Drehmoment und die Drehzahl der Gleichstrom-Nebenschlußmaschine sind über die Steuervorrichtung praktisch unabhängig voneinander einstellbar. Die Gleichstrom-Nebenschlußmaschine wird hierbei im Vier-Quadranten-Betrieb angesteuert.

Die gleichen Vorteile ergeben sich, wenn als Fahrantriebsmaschine eine Drehstrom-Asynchronmaschine vorgesehen ist.

Zweckmäßigerweise ist als Steuervorrichtung eine Impulssteuereinheit vorgesehen.

Eine Weiterbildung der Erfindung besteht darin, daß das Antriebsrad mit einer Speicherbremse verbunden ist, die als Parkbremse und/oder als Notfallbremse für das Flurförderzeug vorgesehen ist. Die Speicherbremse wird regelmäßig nur dann in Eingriff gebracht, wenn das Flurförderzeug steht oder eine Notbremsung erforderlich ist. Die Speicherbremse kann aus diesem Grund relativ klein dimensioniert werden und unterliegt praktisch keinem Verschleiß.

Gemäß einer vorteilhaften Weiterbildung sind Mittel zum Erkennen einer Fehlfunktion der Steuervorrichtung der Fahrantriebsmaschine vorgesehen, welche mit der Speicherbremse in Wirkverbindung stehen. Eine Fehlfunktion des Flurförderzeugs kann beispielsweise über Prüfgrößen der Steuervorrichtung ermittelt werden. Darüber hinaus ist es möglich, unzulässige oder nicht definierte Betriebszustände des Flurförderzeugs über geeignete Sensoren zu erfassen und gegebenenfalls hieraus auf eine Fehlfunktion zu schließen. Wenn eine Fehlfunktion der Steuereinheit erkannt wird, fällt die Speicherbremse selbsttätig ein.

Zweckmäßigerweise ist als Speicherbremse eine Federspeicherbremse oder eine Magnetspeicherbremse mit fest eingestelltem Bremsmoment vorgesehen. Eine Einstellbarkeit oder Regelbarkeit des Bremsmoments der Speicherbremse ist für die oben beschriebenen Einsatzfälle nicht angezeigt.

Weitere Vorteile und Einzelheiten der Erfindung werden anhand des in den schematischen Figuren dargestellten Ausführungsbiels näher erläutert. Dabei zeigt
- Figur 1: ein gattungsgemäßes Flurförderzeug,
- Figur 2: eine erfindungsgemäße Antriebsanordnung eines Flurförderzeugs.

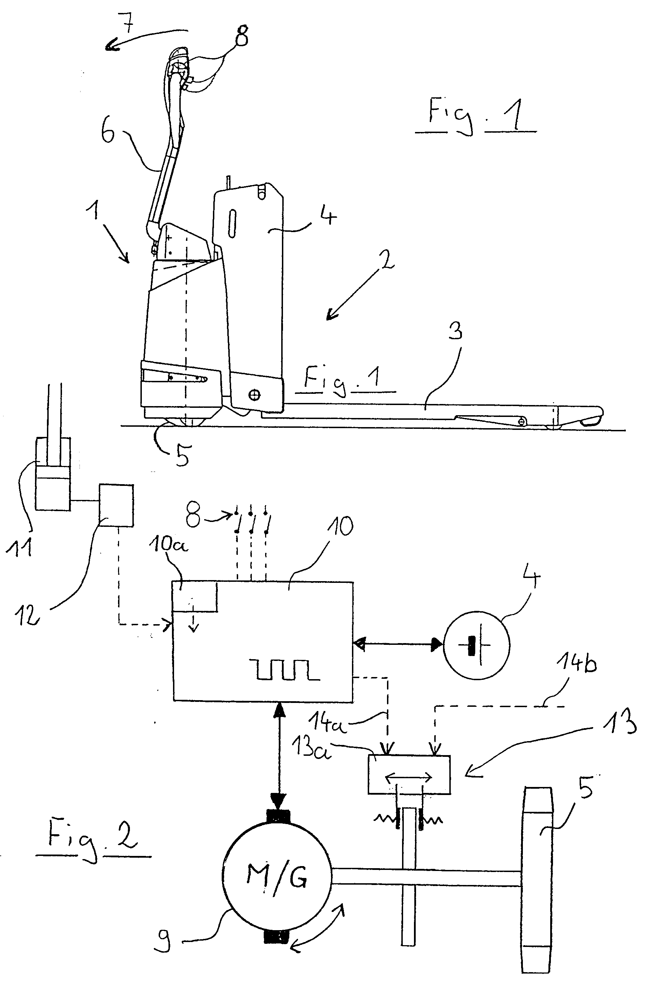

Figur 1 zeigt ein gattungsgemäßes, einen Antriebsteil 1 und einen Lastteil 2 aufweisendes Flurförderzeug. Der relativ zu dem Antriebsteil 1 anhebbare Lastteil 2 umfaßt eine Lastgabel 3 und einen Batterieblock 4.

In dem Antriebsteil 1 befindet sich eine Antriebseinheit des Flurförderzeugs, die mit einem Antriebsrad 5 verbunden ist. Die Steuerung der Antriebseinheit erfolgt über an einer Deichsel 6 angeordnete Schalter 8. Die Deichsel 6 ist in ihrer Außerbetriebsstellung dargestellt, in welche die Deichsel 6 beispielsweise mittels einer Feder vorgespannt ist. Zum Betreiben des Flurförderzeugs wird die Deichsel 6 in Richtung 7 in eine für die Bedienperson ergonomisch günstige Stellung geschwenkt.

In Figur 2 ist eine erfindungsgemäße Antriebseinheit schematisch dargestellt. Ein Antriebsrad 5 ist hierbei mit einer elektrischen Fahrantriebsmaschine 9 verbunden. Die Fahrantriebsmaschine kann beispielsweise als Gleichstrom-Nebenschlußmaschine oder als Drehstrom-Asynchronmaschine ausgeführt sein. Die Drehrichtung und das Drehmoment der Fahrantriebsmaschine wird durch eine Steuervorrichtung 10 vorgegeben, die in diesem Ausführungsbeispiel als Impulssteuereinheit ausgeführt ist. Die Fahrantriebsmaschine 9 wird über die Steuervorrichtung 10 durch den Batterieblock 4 mit elektrischer Energie versorgt.

Die Größe und die Richtung des mit der Fahrantriebsmaschine 9 erzeugten Drehmoments wird von der Steuervorrichtung 10 in Abhängigkeit von den Vorgaben durch die Stellungen der Schalter 8 gesteuert, wobei die Schalter 8 hierbei als zwei- oder mehrstufige Schalter oder als stufenlose Schalter ausgeführt sein können.

Erfindungsgemäß ist die Fahrantriebsmaschine 9 als Betriebsbremse des Flurförderzeugs vorgesehen. Die Fahrantriebsmaschine 9 wird hierzu im Vier-Quadranten-Betrieb betrieben, wodurch mit der Fahrantriebsmaschine 9 auch Bremsmomente erzeugt werden können. Die Größe eines Bremsmoments wird in Abhängigkeit von der Stellung eines Schalters 8 für den Fahrantrieb sowie in Abhängigkeit von dem momentanen Beladungszustand und der Fahrgeschwindigkeit festgelegt. Hierbei ist es möglich, die Fahrantriebsmaschine als Generator zu betreiben und mit der so gewonnenen elektrischen Energie die Batterie 4 zu laden.

Als Mittel zum Erfassen des momentane Beladungszustands, also des Gewichts einer mit der Lastgabel 3 aufgenommenen Last, kann beispielsweise ein mit der Druckkammer eines Hubzylinders 11 verbundener Öldrucksensor 12 verwendet werden. Der Öldrucksensor erzeugt ein von dem Druck im Hubzylinder 11 abhängiges elektrisches Signal und stellt dieses der Steuervorrichtung 10 zur Verfügung. Als Mittel zum Erfassen der momentanen Fahrgeschwindigkeit steht ein Teil 10a der Steuervorrichtung 10 selbst zur Verfügung. Ebenfalls möglich ist es, hierfür einen gesonderten Geschwindigkeitssensor vorzusehen.

Zusätzlich zu der als Betriebsbremse verwendeten Fahrantriebsmaschine 9 ist ein Speicherbremse 13 vorgesehen, als Parkbremse und/oder als Notbremse eingesetzt wird. Die in diesem Ausführungsbeispiel als Federspeicherbremse ausgeführte Speicherbremse 13 ist während des normalen Betriebs des Flurförderzeugs mittels eines Bremslüfters 13a ständig gelüftet. Der Bremslüfter kann hierzu in Abhängigkeit von verschiedenen Steuersignalen 14a, b betätigt werden.

Das Steuersignal 14b ist in diesem Ausführungsbeispiel abhängig von einer die Betriebsbereitschaft des Flurförderzeugs wiedergebenden Größe, beispielsweise der Stellung der Deichsel 6 oder der Schaltstellung eines Hauptschalters. Das Steuersignal 14a ist abhängig von dem Betriebszustand der Steuereinheit 10. Hierdurch wird beispielsweise bei einer Fehlfunktion der Steuereinheit 10 die Speicherbremse 13 automatisch in Eingriff gebracht.

Bei dieser erfindungsgemäßen Anordnung ist sichergestellt, daß jederzeit eine ausreichende Bremswirkung der Betriebsbremse zur Verfügung steht. Gleichzeitig werden überhöhte Bremsbeschleunigungen, die beispielsweise zu einer Beschädigung einer aufgenommenen Last führen könnten, vermieden. Die Erfindung kann bei allen gattungsgemäßen Flurförderzeugen, beispielsweise Niederhubwagen, Hochhubwagen oder Kommissioniergeräten eingesetzt werden.

## Patentansprüche

1. Flurförderzeug, insbesondere deichselgelenktes Flurförderzeug oder Kommissioniergerät, mit mindestens einem Antriebsrad (5), welches mit einer elektrischen Fahrantriebsmaschine (9) verbunden ist, wobei die Größe und die Richtung eines Drehmoments der Fahrantriebsmaschine (9) mittels einer Steuervorrichtung (10) steuerbar sind, **dadurch gekennzeichnet**, daß die Fahrantriebsmaschine (9) als Betriebsbremse für das Flurförderzeug vorgesehen ist, wobei ein mittels der Fahrantriebsmaschine (9) erzeugbares Bremsmoment in Abhängigkeit von der momentanen Fahrgeschwindigkeit des Flurförderzeugs und/oder in Abhängigkeit von dem momentanen Beladungszustand des Flurförderzeugs mittels der Steuervorrichtung (10) beeinflußbar ist.

2. Flurförderzeug nach Anspruch 1, dadurch gekennzeichnet, daß Mittel zum Erfassen des momentanen Beladungszustands des Flurförderzeugs vorgesehen sind, die mit der Steuervorrichtung (10) in Wirkverbindung stehen.

3. Flurförderzeug nach Anspruch 1 oder 2, daß Mittel zum Erfassen der momentanen Fahrgeschwindigkeit des Flurförderzeugs vorgesehen sind, die mit der Steuervorrichtung (10) in Wirkverbindung stehen.

4. Flurförderzeug nach Anspruch 3, dadurch gekennzeichnet, daß die Steuervorrichtung (10) ein Mittel zum Erfassen der momentanen Fahrgeschwindigkeit darstellt.

5. Flurförderzeug nach einem der Ansprüche 1 bis 4, dadurch gekennzeichnet, daß die Fahrantriebsmaschine (9) während eines Abbremsens des Flurförderzeugs als Generator betreibbar ist.

6. Flurförderzeug nach einem der Ansprüche 1 bis 5, dadurch gekennzeichnet, daß als Fahrantriebsmaschine (9) eine Gleichstrom-Nebenschlußmaschine vorgesehen ist.

7. Flurförderzeug nach einem der Ansprüche 1 bis 6, dadurch gekennzeichnet, daß als Fahrantriebsmaschine (9) eine Drehstrom-Asynchronmaschine vorgesehen ist.

8. Flurförderzeug nach einem der Ansprüche 1 bis 7, dadurch gekennzeichnet, daß als Steuervorrichtung (10) eine Impulssteuereinheit vorgesehen ist.

9. Flurförderzeug nach einem der Ansprüche 1 bis 8, dadurch gekennzeichnet, daß das Antriebsrad mit einer Speicherbremse (13) verbunden ist, die als Parkbremse und/oder als Notfallbremse für das Flurförderzeug vorgesehen ist.

10. Flurförderzeug nach einem der Ansprüche 1 bis 9, dadurch gekennzeichnet, daß Mittel zum Erkennen einer Fehlfunktion der Steuervorrichtung (10) der Fahrantriebsmaschine (9) vorgesehen sind, welche mit der Speicherbremse (13) in Wirkverbindung stehen.

11. Flurförderzeug nach einem der Ansprüche 1 bis 10, dadurch gekennzeichnet, daß als Speicherbremse (13) eine Federspeicherbremse oder eine Magnetspeicherbremse mit fest eingestelltem Bremsmoment vorgesehen ist.
